# EUROPÄISCHE PATENTSCHRIFT

(11) **EP 4 375 221 B1**
(45) Veröffentlichungstag und Bekanntmachung des Hinweises auf die Patenterteilung: **01.07.2026**
(21) Anmeldenummer: 23000161.2
(22) Anmeldetag: 15.11.2023
(51) Int. Cl.: B65G 57/30, B65G 59/06, B65G 60/00

(54) **MASCHINE ZUM STAPELN UND ENTSTAPELN VON PALETTEN**
PALLET STACKING AND DESTACKING MACHINE
MACHINE POUR EMPILER ET DÉSEMPILER DES PALETTES

(30) Priorität: 23.11.2022 IT 202200024081
(43) Veröffentlichungstag der Anmeldung: 29.05.2024
(73) Patentinhaber: Tanzer Maschinenbau Srl, 39011 Lana (BZ) (IT)
(72) Erfinder: Gufler, Matthias, 39022 Algund (BZ) (IT); Mantinger, Martin, 39010 Nals (Bz) (IT); Schnitzer, Josef, 39019 Dorf Tirol (Bz) (IT)
(74) Vertreter: Oberosler, Ludwig

(56) Entgegenhaltungen:
- EP-A1- 0 385 455
- WO-A1-2011/138482
- DE-A1- 3 533 572
- KR-B1- 102 021 231

## Beschreibung

Die Erfindung bezieht sich auf eine Maschine zum Stapeln und Entstapeln von Paletten aus unterschiedlichem Werkstoff von der Art für die Lagerung und den Transport von Waren.

Es sind Maschinen zum Stapeln und Entstapeln von Paletten bekannt in welchen das Hinzufügen, bzw. das Entnehmen, der einzelnen Paletten oben am vorher gebildeten Palettenstapel erfolgt oder in welchen die besagten Arbeitsvorgänge durch Hinzufügen einzelner Paletten unter dem Stapel, bzw. durch Entnehmen einzelner Paletten unten vom Stapel, erfolgt. Im Fall, dass das Hinzufügen und das Entnehmen unten am Stapel erfolgt, wird das Entnehmen durch Anheben des Stapels, ohne dass die unterste Palette angehoben wird, bewirkt wobei diese mittels einem Förderorgan oder einem Schieber aus dem Bereich unter dem Stapel entnommen wird, während im Fall des Hinzufügens einer Palette, der gesamte Stapel um eine Höhe, leicht größer als die Höhe einer einzelnen Palette, angehoben wird um mittels eines Förderorgans oder eines Schiebers die hinzuzufügende Palette unter den angehobenen Stapel zu schieben.

Aus der WO 2011/138482 A1 ist eine Stapel-/Entstapelmaschine Paletten gemäß dem Oberbegriff des Anspruchs 1 bekannt in welcher beide Arme für das Anheben der Paletten ein größeres Höhenmaß, als die Höhe der einzelnen Paletten, aufweisen, mit zwei Paaren von oberen und unteren Auflagen ausgestattet sind welche unter sich vertikal mehr als die Palettenhöhe beabstandet sind und horizontal derart beabstandet sind um in die Zwischenräume zwischen die Strukturelemente der Paletten eingeführt werden zu können. Diese Ausführung sieht nicht die Ausrichtung der, unter den vorher gestapelten Paletten, zugeführten Paletten, mit den bereits gestapelten Paletten, vor.

Aus der EP 0385455 A1 sind für die Handhabung von Paletten, unter sich beabstandete Auflagen bekannt. Diese Auflagen sind nicht an einem Arm, sondern an einem viereckigen Rahmen vorgesehen und sind einzeln betätigbar um eine aktive vorstehende Position oder eine passive eingezogene Position einzunehmen.

Aus der KR 102021231 B1 ist eine Vorrichtung mit mehrfachen Auflagen bekannt welche jedoch nicht unter sich vertikal beabstandet sind.

Aus der DE 3533572 A1 sind unter sich vertikal beabstandete Auflagen bekannt welche an einer Vorrichtung vorgesehen sind, welche für das Entstapeln verwendbar ist, wobei die Paletten von unten eines Stapels entnommen werden während das Stapeln oben am Stapel erfolgt. Diese Vorrichtung ist mit keiner Transfereinheit für die Zufuhr/Abfuhr der Paletten ausgestattet und sieht keine seitliche Ausrichtung zwischen den Paletten vor.

Die bekannten Maschinen zum Stapeln und Entstapeln weisen folgende Nachteile auf:
- die Paletten werden nicht genau nach ihren Rändern ausgerichtet gestapelt, wodurch unregelmäßige Stapel entstehen welche, im Fall beachtenswerter Höhen der Stapel, wenig stabil sind;
- die Versuche ein Ausrichten nach den Stapelrändern zu erreichen indem mit den Hebearmen seitlich auf die Paletten gedrückt wird erfordern, insbesondere bei Holzpaletten, hohe Kräfte und verursachen öfters durch vorstehende Nägel oder Schrauben und durch das, auf die auszurichtende Palette wirkende, Gewicht des darüber angeordneten Stapels, Beschädigungen;
- im Fall des Entstapelns nehmen die einzeln entnommenen Paletten nicht immer eine präzise Position ein, wobei das Risiko besteht, dass bei ihrer folgenden Weiterförderung Hemmungen auftreten, bzw. dass eine Arbeitsfase für die Korrektur der Position nötig ist.

Die Erfindung wird durch die Maschine gemäß Anspruch 1 definiert.

Die Erfindung stellt sich die Aufgabe eine Maschine zum Stapeln und Entstapeln von Paletten der vorher genannten Art zu schaffen mittels welcher, beim Stapeln eine präzise Ausrichtung der Stapelränder, ohne Gefahr von Beschädigungen der Paletten und beim Entstapeln eine genaue Positionierung der entnommenen Paletten erfolgt, um deren Weiterförderung ohne Hemmungsgefahr, bzw. ohne Notwendigkeit einer Neupositionierung der Paletten, zu ermöglichen.

Zur Lösung dieser Aufgabe schlägt die Erfindung den Einsatz von Hebearmen vor welche geeignet sind jede der zu stapelnden Paletten welche unter den Stapel eingeführt wird, mit den seitlichen Rändern und dem vorderen Rand nach den entsprechenden Rändern der Palette am Stapelboden, auszurichten. Um dies zu erreichen ist die Maschine mit zwei Hebearmen ausgestattet welche geeignet sind mindestens die zwei letzten übereinander angeordneten Paletten an der Basis des Stapels seitlich zu belasten und den Stapel höher als die Höhe eines Stapels anzuheben. Jeder der Hebearme weist zwei Paare von Auflagen auf welche gegen den Palettenstapel abstehen und unter sich, gemäß der Längserstreckung der Arme, um ein (eventuell einstellbares) Maß beabstandet sind welches kleiner als die Länge der zur Zuführrichtung, bzw. Entnahmerichtung, parallelen Ränder der Paletten ist. Jedes Auflagenpaar umfasst eine obere Auflage welche vorteilhafterweise etwas länger und stärker ist und eine untere Auflage welche vorteilhafterweise vertikal unter der ersten angeordnet ist und von dieser um mehr als die Palettenhöhe beabstandet ist. Der Abstand zwischen jedem der oberen Auflagen und der entsprechenden unteren Auflage kann einstellbar sein indem vorgesehen wird, dass mindestens eine der besagten Auflagen jedes der Auflagenpaare vertikal verstellbar am horizontalen Arm angebracht ist.

Die besagte Anordnung der Auflagen an beiden Hebearmen ermöglicht das seitliche Einführen der oberen Auflagen in die Zwischenräume der voruntersten Palette an der Basis des Stapels, während die unteren Auflagen in die Zwischenräume der untersten Palette an der Basis des Stapels eingeführt werden. Durch nachfolgendes Anheben des Stapels, wird die unterste Palette an den unteren Auflagen zurückgehalten und wird, vertikal von der voruntersten Palette, eventuell samt allen darüber angeordneten Paletten, beabstandet, von den oberen Auflagen getragen.

Die Beabstandung zwischen der voruntersten und der untersten Palette an der Basis des Stapels ermöglicht, dass die Ausrichtung der seitlichen Ränder der besagten Paletten dadurch erfolgt, dass diese seitlich durch die Hebearme zusammengedrückt werden, wobei diese vertikal ein Maß aufweisen welches größer als die Höhe einer Palette samt der vertikalen Beabstandung der oberen Auflagen zu den unteren Auflagen, ist. Der Kraftaufwand, um die Ausrichtung der untersten, von den unteren Auflagen zurückgehaltenen, Palette mit der darüber angeordneten, an den oberen Auflagen aufliegenden, Palette zu erreichen ist minimal, weil die unterste Palette frei auf den unteren Auflagen gleiten kann, ohne dass auf sie das Gewicht der darüber angeordneten Paletten wirkt.

Die selbe Beabstandung welche durch die vertikal beabstandeten Auflagen an den Hebearmen erreicht wird ermöglicht auch die Ausrichtung der Paletten nach ihrem stirnseitigen, zur Zuführrichtung quer verlaufendem, Rand. Zwecks Stapelung wird die dem Palettenstapel hinzuzufügende Palette auf einer Transfervorrichtung zugeführt, wie z.B. auf einem Förderband, einem Rollenförderer oder einem Kettenförderer, dabei ist der Stapel von den Hebearmen der Maschine angehoben. Die zu stapelnde Palette wird durch eine, im Bereich unter dem Palettenstapel vorgesehene, Lichtschranke in einer Position leicht vor dem stirnseitigen unteren Rand des Stapels, angehalten. Anschließend wird der Stapel abgesenkt um auf der zugeführten Palette aufzuliegen und um die Hebearme ausfahren und absenken zu können um anschließend die oberen Auflagen in die Zwischenräume der untersten Palette des Stapels und die unteren Auflagen in die Zwischenräume der herangeführten, zu stapelnden Palette einführen zu können. Anschließend werden die Hebearme so weit angehoben, dass der Stapel von der zu stapelnden Palette beabstandet ist, jedoch werden dabei die Paletten nicht seitlich belastet und die vom Transferorgan oder der Transfervorrichtung herangeführte Palette wird dabei nicht angehoben. In diesem Zustand wird die zu stapelnde Palette von der Transfervorrichtung bis zu einem stirnseitigen Anschlag bewegt welcher mindestens für den unteren Teil des Stapels als Endanschlag wirkt. Anschließend kann die, mit den Paletten des darüber angeordneten Stapels, stirnseitig ausgerichtete Palette, durch gegenläufiges Zusammendrücken der Hebearme, auch seitlich mit dem darüber angeordneten Stapel, ohne Beschädigungsgefahr und mit geringem Kraftaufwand, ausgerichtet werden, wobei die Palette während der Stapelfase auf den unteren Auflagen der Hebearme, ohne Belastung durch das Gewicht der darüber angeordneten Paletten, gleiten kann. Natürlich wird während der Entstapelfase jede der von unten am Stapel entnommenen Paletten immer in exakter Position auf der Transfervorrichtung abgelegt weil diese immer in Längs- und in Querrichtung mit den vorher gestapelten Paletten ausgerichtet gestapelt worden waren.

Im Fall von Paletten welche nicht durch eine erfindungsgemäße Maschine gestapelt worden waren, kann jede der Paletten mit ihren Rändern mit den entsprechenden Rändern der darüber angeordneten Palette ausgerichtet werden indem sie, infolge seitlichem Zusammendrücken mit den Hebearmen und Verschieben durch die Transfervorrichtung gegen die Anschlagprofile, immer in einer präzisen vorbestimmten Position auf der Transfervorrichtung abgelegt wird.

Die erfindungsgemäße Maschine umfasst wesentlich eine Antriebseinheit für die Hebearme um diese gegeneinander horizontal, zwecks Einführen/Herausziehen der Auflagen, in die eigens dafür vorgesehenen Zwischenräumen an jeder der Paletten zu bewegen, bzw. aus diesen herauszuziehen, und um mindestens die zwei untersten Paletten an der Stapelbasis zwischen den vertikalen parallelen Flächen der beiden Hebearme zusammenzudrücken und um die Paletten von einer Transfervorrichtung oder einem Transferorgan abzuheben, bzw. auf dieses abzulegen. Diese Antriebseinheit umfasst eine mechanische Vorrichtung (z.B. mit Riementrieb, Zahnstange, Gewindespindel) oder eine hydraulische Vorrichtung welche zwischen dem Rahmen der Maschine und dem Rahmen der Antriebseinheit wirkt, welcher vertikal gleitend am Rahmen der Maschine geführt ist und eine mechanische oder hydraulische Vorrichtung umfasst welche auf die, am Rahmen der Antriebseinheit horizontal und quer zur Zuführ-/Abführbewegung der Paletten, gleitenden Hebearme wirkt um die gegenläufige horizontale Bewegung der beiden Hebearme, zwecks seitlichem Einführen/Herausziehen der abragenden Auflagen in/aus den Paletten und das seitliche Zusammendrücken der Paletten, zwecks deren gegenseitiges seitliches Ausrichten, zu erreichen.

Das besagte Transferorgan oder die besagte Transfervorrichtung für die zu stapelnden oder für die entstapelten Paletten wirkt parallel zur Längserstreckung der Hebearme.

Die Erfindung schließt nich aus, dass zwei bekannte Transfervorrichtungen vorgesehen sind, z.B. eine mit Rollen parallel zur Längserstreckung der Hebearme und eine, z.B.mit Ketten welche quer zur ersten wirkt, wobei die Ketten zwischen den Rollen angeordnet sind und eine der Vorrichtungen zur anderen vertikal beweglich ist um den Wechsel der Paletten von einer Transfervorrichtung auf die andere zu ermöglichen. Weiters schließt die Erfindung nicht aus dass alternativ, im Bereich unter dem Palettenstapel, eine Drehplattform vorgesehen ist welche mit Rollorganen oder Förderketten ausgestattet ist welche geeignet sind die von einem Transferorgan zugeführten Paletten zu übernehmen um sie, infolge Drehen der Plattform, an ein zum vorgenannten Transferorgan um 90° versetzt angeordnetes Transferorgan weiterzugeben. Die besagten Transfervorrichtungen für die Paletten welche zueinander um 90° versetzt angeordnet sind ermöglichen die Zufuhr der einzelnen zu stapelnden Paletten, bzw. die Abfuhr der einzelnen entstapelten Paletten, an unterschiedlichen Seiten der Maschine.

Vorteilhafterweise ist die Maschine mit einer Sonde oder Lichtschranke für die Erhebung der maximalen oder gewünschten Stapelhöhe ausgestattet, der Transfer des Palettenstapels erfolgt mittels der selben Transfervorrichtung welche für den Transfer der einzelnen zu stapelnden oder entstapelten Paletten vorgesehen ist.

Die Erfindung wird anschließend anhand eines, in den beigelegten Zeichnungen schematisch dargestellten, vorzuziehenden Ausführungsbeispiels einer erfindungsgemäßen Maschine zum Stapeln und Entstapel von Paletten näher erklärt, dabei erfüllen die Zeichnungen rein erklärenden, nicht begrenzenden Zweck.

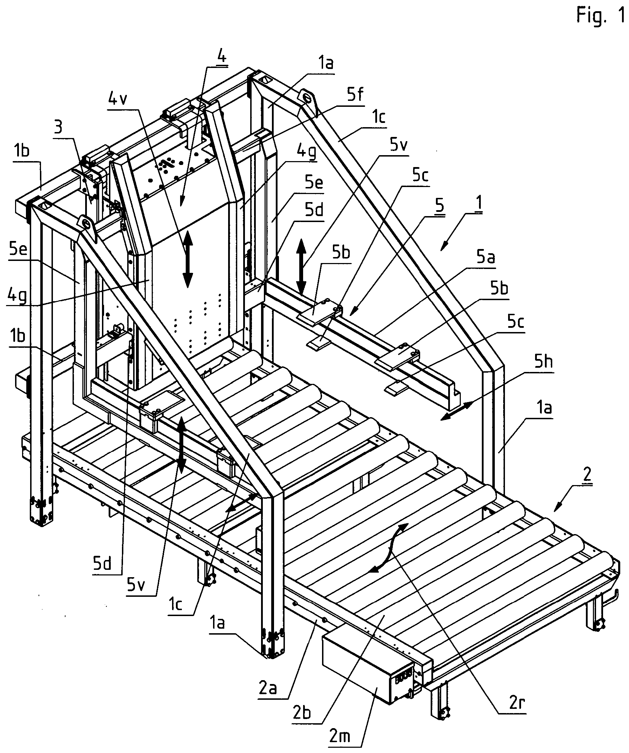

Die Fig. 1 zeigt in perspektivischer Darstellung die erfindungsgemäße Maschine zum Stapeln und Entstapeln von Paletten samt der Transfervorrichtung welche parallel zur Längserstreckung der Hebearme wirkt.

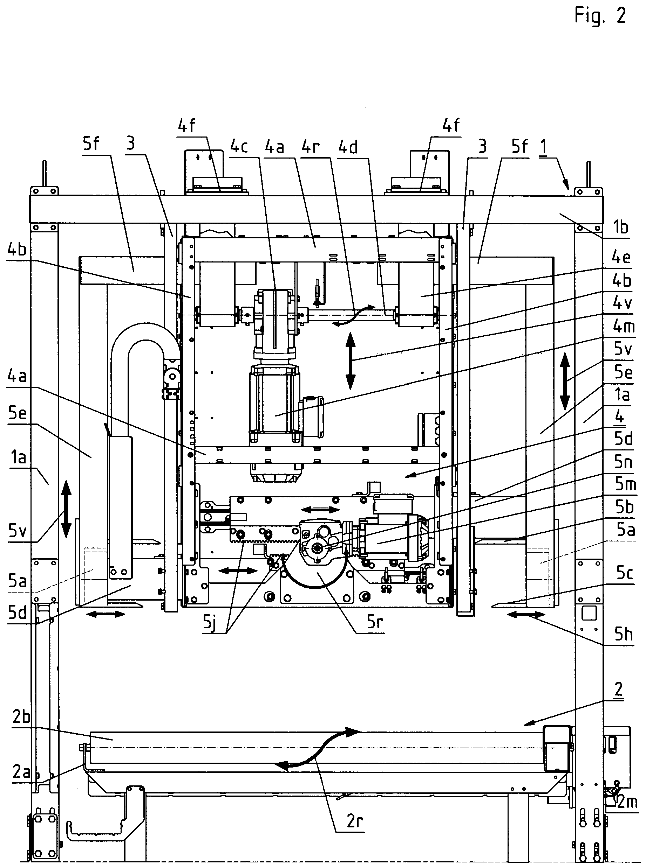

Die Fig. 2 zeigt eine Ansicht von hinten der in Fig. 1 dargestellten Maschine mit der Betätigungsvorrichtung für die Hebearme ohne Abdeckung.

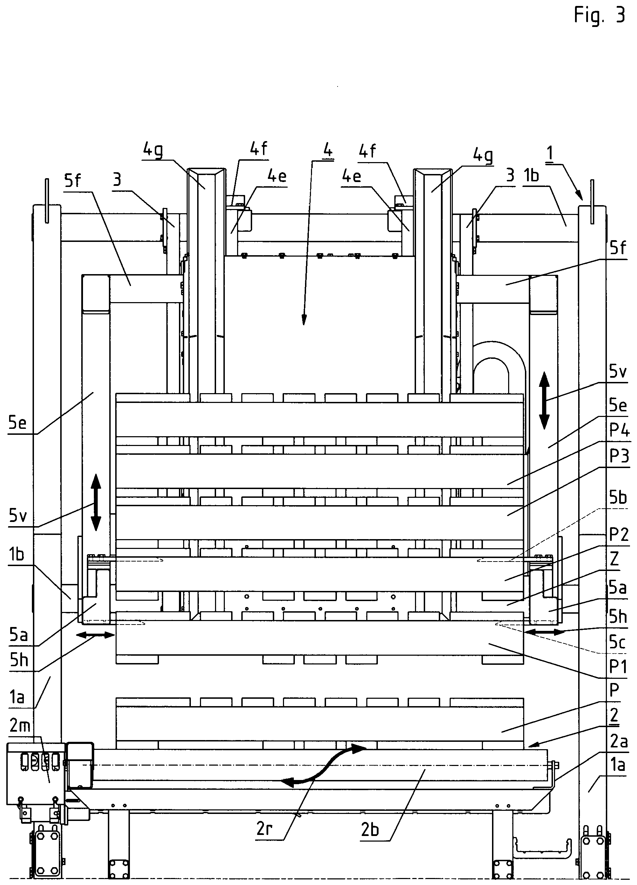

Die Fig. 3 zeigt eine Vorderansicht der in den Fig. 1 und 2 dargestellten Maschine mit einem angehobenen Palettenstapel und einer Palette auf dem Transferorgan im Bereich unter dem besagten Stapel.
Die Fig, 4, 4a, 4b, 4c zeigen die Seitenansicht mehrere Arbeitsfasen des Stapelns einer Palette.
Die Fig. 5, 5a, 5b, 5c zeigen die Seitenansicht mehrerer Arbeitsfasen des Entstapelns einer Palette.
Die Fig. 6 zeigt in perspektivischer Sicht einen der beiden Hebearme mit den, entlang dem Hebearm, verstellbaren Auflagepaaren.
Die Fig. 7 ist die Vorderansicht eines Hebearms mit einer vertikal einstellbaren Auflage für die Paletten.
Die Fig. 8 zeigt in Perspektive die in Fig. 1 dargestellte Maschine für die Stapelung/Entstapelung von Paletten welche mit zwei Transfervorrichtungen ausgestattet ist, eine mit Rollen die andere mit Ketten wobei diese zueinander um 90° versetzt angeordnet sind,
Die Fig. 9 zeigt in Perspektive die in Fig. 1 dargestellte Maschine für die Stapelung/Entstapelung von Paletten welche mit zwei Transfervorrichtungen, eine mit Rollen die andere mit Ketten ausgestattet ist, wobei diese zueinander um 90° versetzt angeordnet sind und beide um eine vertikale Achse drehbar gelagert sind.

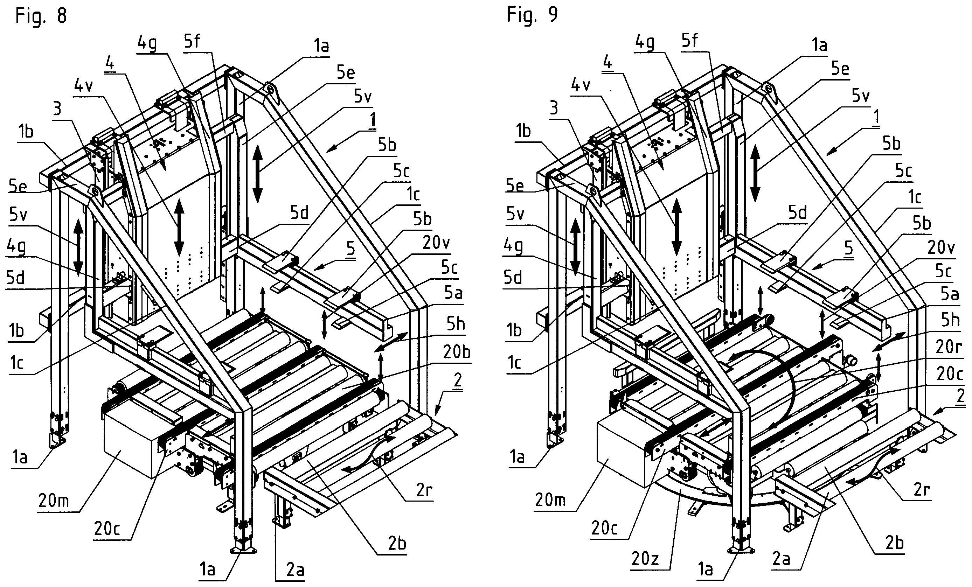

Die Maschine zum Stapeln und Entstapeln von Paletten besteht wesentlich aus einem Rahmen 1, aus einem Rollenförderer 2, aus Hebearmen 5 und aus einer Betätigungsvorrichtung 4 für die gegenläufige horizontale Betätigung 5h und die vertikale Betätigung 5v der besagten Arme. Der besagte Rollenförderer 2 kann im Bereich unterhalb der Hebearme 5 von einem Abschnitt ersetzt werden welcher Kettenförderer aufweist welche zwischen den Rollen 20b vorgesehen und vertikal betätigbar 20v sind (Fig. 8) oder welcher aus einer bekannten Vorrichtung mit mehreren Rollen 20b und Förderketten 20c besteht welche um eine vertikale Achse drehbar 20r gelagert sind (Fig. 9). In beiden Fällen sind die Rollen 20b und die Ketten 20c von einem einzigen oder von zwei spezifischen Motoren 20m angetrieben. Die vertikale Bewegung 20v wird mechanisch, mittels elektrischem Stellantrieb oder einem Druckantrieb erzeugt und im Fall der Drehlagerung kann die Drehung 20r durch einen Motor erzeugt werden welcher auf einen Zahnkranz 20z wirkt.

Der Rahmen 1 der Maschine umfasst an beiden Seiten des Rollenförderers 2 vier Pfosten 1a, diese Pfosten sind am oberen Ende durch schräge Strukturelemente 1c und an der Rückseite durch horizontale Strukturelemente 1b verbunden um einen U-förmigen Aufbau zu bilden welcher geeignet ist den Rollenförderer 2 aufzunehmen. An den horizontalen Strukturelementen 1b des Rahmens 1 welche quer zur Zuführrichtung Pa, bzw, zur Entnahmerichtung, der zu stapelnden, bzw. zu entstapelnden, Paletten angeordnet sind, sind zwei vertikale parallele Führungen 3 für den, aus zwei durch horizontale Elemente 4a verbundene vertikale Elemente 4b gebildeten Rahmen eines Betätigungsmechanismus 4 für die beiden Hebearme, befestigt. Die besagten vertikalen Elemente 4b des Rahmens sind an den vertikalen Führungen 3 vertikal verfahrbar 4v welche am Rahmen 1 der Maschine befestigt sind. Am Rahmen 4a, 4b der Betätigungsvorrichtung 4 für die Hebearme 5a ist ein Motor 4m mit Winkelgetriebe 4c, zwecks Antrieb 4r einer horizontalen Welle 4d vorgesehen welche an beiden Enden Riemen 4e aufweist deren Enden am horizontalen oberen Strukturelement 1b des Rahmens 1 der Maschine befestigt sind. Durch Antrieb 4r der Welle 4d werden die Riemen 4e auf- oder abgewickelt wodurch das Anheben 4v, bzw. das Absenken, der Betätigungsvorrichtung 4 erfolgt. Im unteren Bereich der Betätigungsvorrichtung 4 sind die horizontal verfahrbaren Arme 5d geführt welche jeweils eine Zahnstange 5g aufweisen welche die, unter sich parallelen, Hebearme 5a mit den, gegen die Paletten P, P1 vorstehenden, oberen Auflagen 5b und unteren Auflagen 5c, tragen. Die Zahnstangen 5g der Arme 5d werden von einem Zahnrad betätigt welches von einem Motor 5m angetrieben 5r wird, wodurch die gegenläufige horizontale Verschiebung 5h der Hebearme 5a erreicht wird. Zwecks Stabilisierung der besagten gegenläufigen horizontalen Bewegung 5h der Hebearme 5a, sind diese mittels vertikaler Streben 5e mit den horizontalen Führungsprofilen 5f verbunden welche horizontal verschiebbar am Rahmen 4a, 4b der Betätigungsvorrichtung 4 geführt sind. Die Betätigungsvorrichtung 4 weist an der, der Zufuhr der Paletten P zugewandten Seite, zwei vertikale Anschlagprofile 4g auf welche als Anschlag für die Ausrichtung der Paletten während deren Stapelung dienen.

Die Hebearme 5a weisen die selbe oder eine größere Höhe des vertikalen, eventuell verstellbaren, Abstands zwischen den oberen Auflagen 5b und den unteren Auflagen 5c auf, welcher immer größer als die Höhe einer Palette ist. Auf diese Weise wird erreicht dass, durch seitliches Einführen der oberen Auflagen 5b in die Zwischenräume der Palette P1 an der Basis des Palettenstapels und der unteren Auflagen 5c an der zu stapelnden Palette P welche vorher vom Rollenförderer 2 in den Bereich unter den Stapel herangeführt Pa worden war, die zu stapelnde, auf den unteren Auflagen 5c gehaltene, Palette P, in einem bestimmeten Abstand Z von der, auf den oberen Auflagen 5b liegenden Palette P1, gehalten wird. Dies ermöglicht dass, durch Betätigen 2r der Rollen 2b des Rollenförderers 2, zwecks Bewegung Pa der Palette P in Richtung Betätigungsmechanismus 4, der stirnseitige Rand dieser mit dem stirnseitigen Rand der darüber angeordneten Palette P1, durch die Wirkung der vertikalen Anschlagprofile 4g, ausgerichtet wird, indem die Palette P auf den unteren Auflagen 5c gleitet, ohne dass auf sie das Gewicht der darüber angeordneten Paletten P1, P2, P3 wirkt. Das selbe gilt für die Ausrichtung der seitlichen Ränder der Palette P mit den seitlichen Rändern der darüber angeordneten Palette P1, welche durch Zusammendrücken 5h der Hebearme 5a erfolgt.

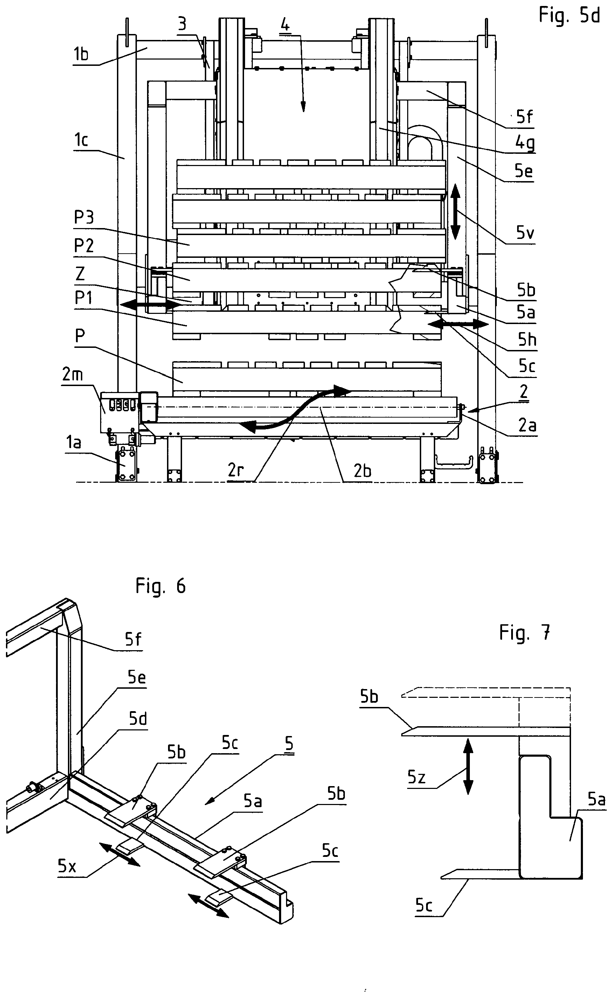

Die Erfindung schließt nicht aus, dass die Auflagepaare 5b, 5c längs der Hebarme 5a (Fig. 6) verstellbar 5x sind und dass beide oder eine der Auflagen 5b, 5c, zwecks Anpassung ihres Abstandes an die Abmaße der Paletten P, vertikal verstellbar 5z (Fig. 7) sind.

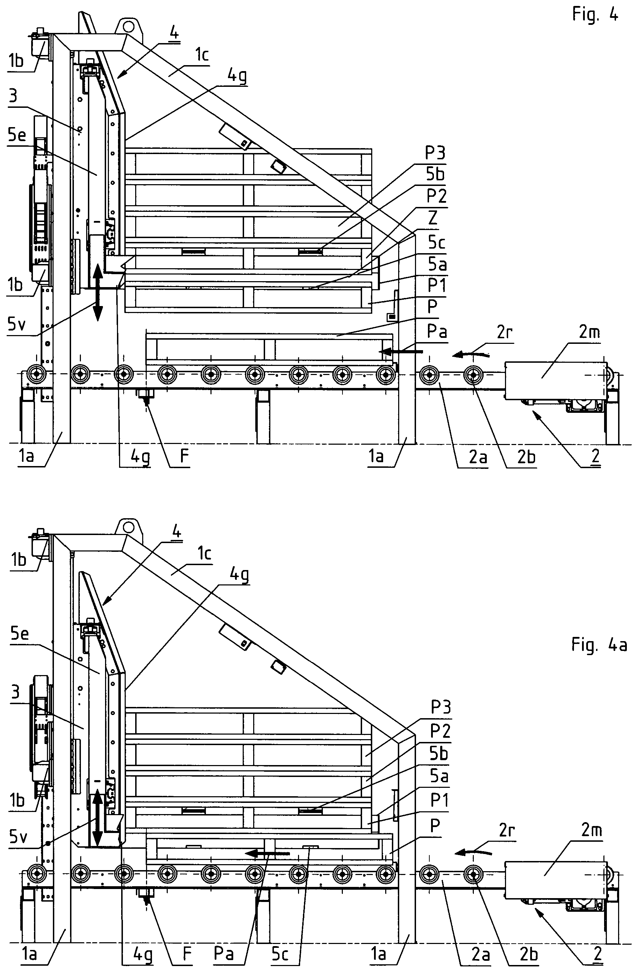

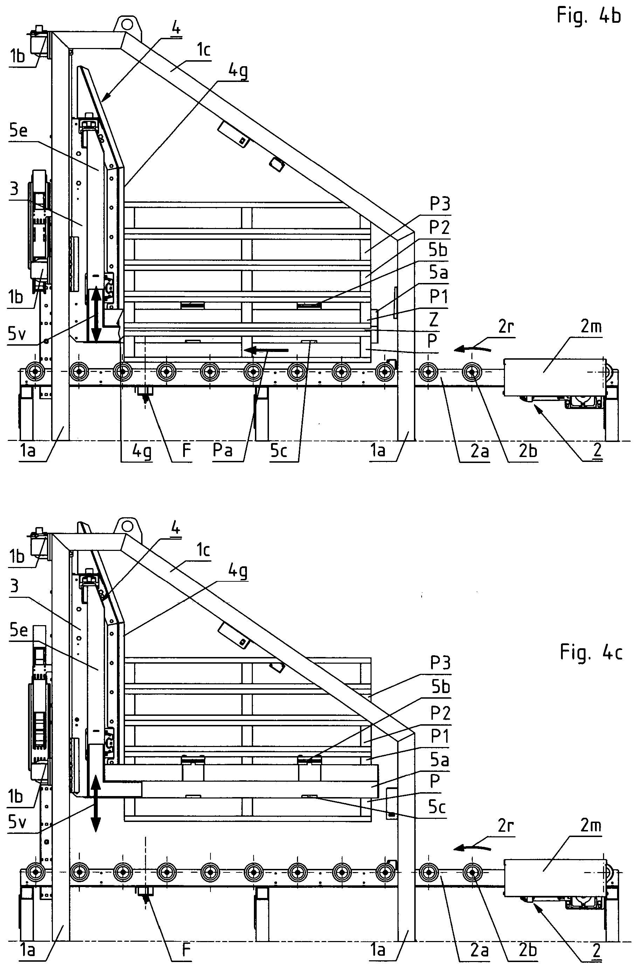

Das durch die erfindungsgemäße Maschine durchgeführte Stapelverfahren umfasst die folgenden Fasen:
- Zuführen Pa der zu stapelnden Palette P mittels Rollenförderer 2 in einen Bereich vertikal unter dem angehobenen Stapel von Paletten P1, P2,m P3, wobei jedoch der vordere Rand der Palette, bezogen auf den entsprechenden Rand der Paletten des Stapels, vertikal leicht zurückversetzt ist, indem diese Position durch eine Sonde oder eine Lichtschranke F (Fig. 4) bestimmt wird;
- Absenken 5v des Palettenstapels P1, P2, P3 und dessen Ablage auf der zu stapelnden Palette P, Herausziehen 5h der oberen 5b und unteren Auflagen 5c der Hebearme (5a) aus den Paletten P1, P2 und anschließendes Einführen der oberen 5b und der unteren Auflagen 5c seitlich in die Paletten P und P1 (Fig. 4a);
- Anheben 5v der Arme 5a, ohne die zu stapelnde Palette P von den Rollen 2b des Rollenförderers 2 abzuheben, wobei jedoch eine Beabstandung Z zwischen der Palette P und der Palette P1 des Palettenstapels erreicht wird und anschließendes Verfahren Pa der zu palettierenden Palette P mittels Rollenförderer 2 gegen die vertikalen Anschlagprofile 4g, wodurch das Ausrichten zwischen den stirnseitigen Rändern der Paletten erreicht wird (Fig. 4b);
- Anheben 4v des Palettenstapels samt der Palette P welche zur Palette P1 distanziert Z ist, Ausrichten der seitlichen Ränder der Paletten P und P1 durch Zusammendrücken 5h der Hebearme 5a (Fig. 4c).

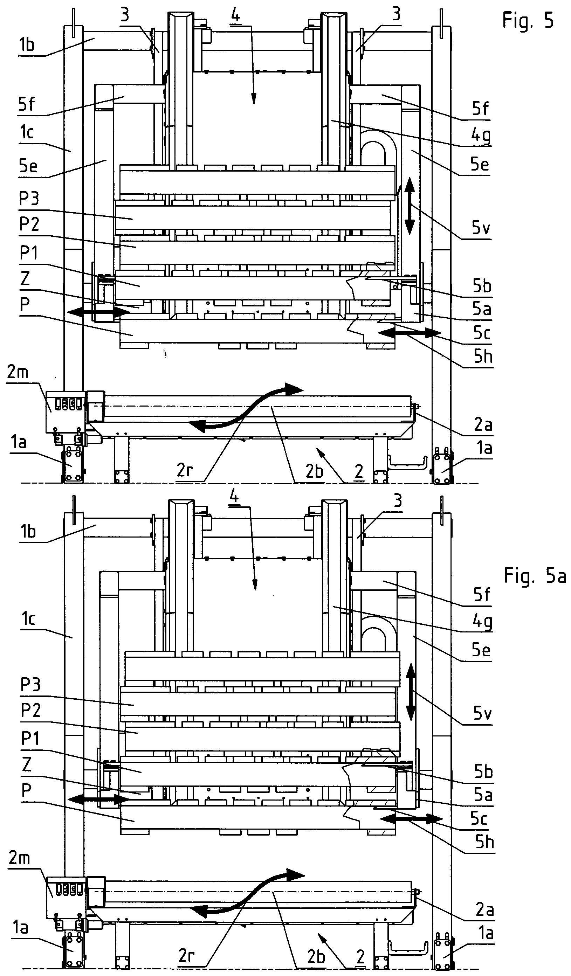

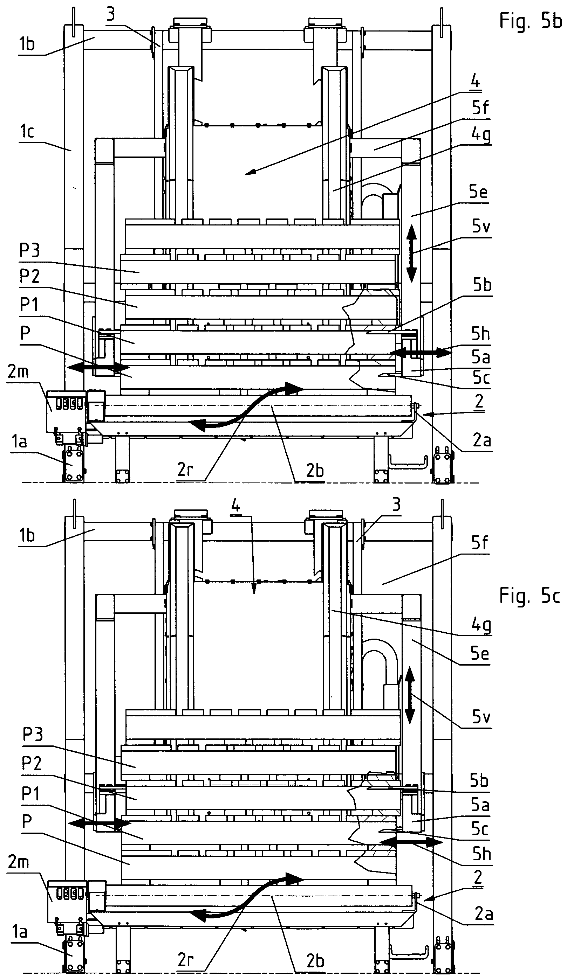

Das durch die erfindungsgemäße Maschine durchgeführte Entstapelverfahren umfasst die folgenden Fasen:
- Anheben 5v des Palettenstapels P1, P2, P3 zusammen mit der zu entstapelnden Palette P deren seitlichen Ränder nicht mit den Rändern der darüber angeordneten Palette P1 ausgerichtet sind, welche auf den unteren Auflagen 5c der Hebearme 5a aufliegt und somit leicht von der Palette P1 (Fig. 5) beabstandet Z ist, Ausrichten der seitlichen Ränder der Palette P mit den entsprechenden Rändern der Palette P1 durch Zusammendrücken 5h der Hebearme 5a (Fig. 5a);
- Absenken des Palettenstapels P, P1, P2, P3 auf den Rollenförderer 2 (Fig. 5b);
- Herausziehen 5h der oberen 5b und der unteren Auflagen 5c durch Auseinanderfahren der Hebearme 5a, Anheben der Arme 5a und Einführen 5h der oberen und unteren Auflagen in die Paletten P1, P2 (Fig. 5c);
- Anheben 5v des Palettenstapels P1, P2, P3 wobei die Palette P auf den Rollen 2b des Rollenförderers 2 in einer Position mit präzise ausgerichteten Längs- und Querrändern, definiert durch das Zusammendrücken 5h der Hebearme 5a und durch die vertikalen Anschlagprofile 4g (Fig. 5d), liegen bleibt.

Natürlich können, insbesondere die Mechanismen für die vertikale 5v und horizontale 5h Betätigung der Hebearme 5a von bekannter mechanischer Art sein, welche sich von der dargestellten Art unterscheidet oder auch von hydraulischer Art sein.

## Patentansprüche

1. Maschine zum Stapeln und Entstapeln von Paletten welche einen, eine Betätigungsvorrichtung (4) für zwei zueinander und zur Zuführrichtung (Pa) der zu stapelnden/entstapelnden Paletten (P) und des Palettenstapels (P1, P2, P3) parallele Hebearme (5a) tragenden, Rahmen (1) und ein Transferorgan oder eine Transfervorrichtung (2) samt Rahmen (4a, 4b) für die Zufuhr (Pa), bzw. die Abfuhr der zu stapelnden, bzw. zu entstapelnden, Paletten (P) umfasst, welche parallel zur Längserstreckung der Hebearme (5a) arbeitet, wobei
die Betätigungsvorrichtung (4) vertikal gleitend (4v) am Rahmen (1) der Maschine angebracht ist und von einer Welle (4d) durch Aufrollen von Riemen (4e), von einer Gewindespindel mit Schraubenmutter, von einer Zahnstange mit Zahnrad oder von einem linearen mechanischen oder hydraulischen Stellantrieb, welcher zwischen dem Rahmen (1) der Maschine und dem Rahmen (4a, 4b) der Betätigungsvorrichtung (4) wirkt, betätigt wird, wobei die Hebearme (5a) horizontal und quer zur Zuführrichtung (Pa) gleitend (5h) am Rahmen (4a, 4b) der Betätigungsvorrichtung (4) angebracht sind und gegenläufig mechanisch mittels Zahnrad (5n) und Zahnstange (5g) oder mittels linearem mechanischem oder hydraulischem Stellantrieb betätigt werden, **dadurch gekennzeichnet,**
**dass** beide Hebearme (5a) größere Höhe als die Höhe einer Palette (P) aufweisen und mit zwei Paaren von oberen (5b) und unteren Auflagen (5c) versehen sind welche vertikal mehr als die Höhe einer Palette (P) beabstandet sind und horizontal so beabstandet sind, dass sie in die Zwischenräume zwischen die Struktelementen der Paletten einführbar sind.

2. Maschine gemäß Anspruch 1, **dadurch gekennzeichnet, dass** für die Zufuhr/Abfuhr der zu stapelnden/entstapelnden Paletten (P) zwei Transfervorrichtungen (20b, 20c) welche zueinander um 90° versetzt arbeiten vorgesehen sind und dass sich diese im Bereich unter dem Palettenstapel kreuzen, wobei eine der Transfervorrichtungen vertikal beweglich (20v) ist damit eine, auf einer der Vorrichtungen, herangeführte Palette (P) an die zweite Vorrichtung welche quer zur ersten wirkt weitergegeben werden kann und eine Zufuhr (Pa) und/oder Abfuhr der einzelnen Paletten (P) seitlich an der Maschione ermöglicht wird.

3. Maschine gemäß Anspruch 1, **dadurch gekennzeichnet, dass** für die Zufuhr/Abfuhr der zu stapelnden/entstapelnden Paletten (P) zwei Transfervorrichtungen welche zueinander um 90° versetzt arbeiten vorgesehen sind und dass, im Bereich unter dem Palettenstapel eine, gemäß einer vertikalen Achse, drehbare (20r) Plattform vorgesehen ist welche Rollelemente (20b) und Förderketten (20c) aufweist welche geeignet sind eine Palette welche auf einer der besagten Transfervorrichtungen herangeführt wird zu übernehmen um diese, infolge Drehung (20r) der Plattform, an die zweite Transfervorrichtung weiterzugeben welche um 90° versetzt zur ersten wirkt.

4. Maschine gemäß Anspruch 1, **dadurch gekennzeichnet, dass** die Position der oberen Auflagen (5b) und der unteren Auflagen (5c) an beiden Hebearmen (5a), gemäß der Längserstreckung der Arme, verstellbar (5x) sind.

5. Maschine gemäß Anspruch 1, **dadurch gekennzeichnet, dass** der Abstand zwischen den oberen Auflagen (5b) und den unteren Auflagen (5c) vertikal einstellbar (5z) ist.

6. Maschine gemäß Anspruch 1, **dadurch gekennzeichnet, dass** die Betätigungsvorrichtung (4) für die Hebearme (5a), in Richtung der Zuführung (Pa) der zu stapelnden Paletten (P), vertikale Anschlagprofile (4g) aufweist welche mit ihrem unteren Ende in den Bereich des Durchlaufs der, von der Transfervorrichtung (2) herangeführten (Pa), Paletten (P) ragen.

7. Maschine gemäß Anspruch 1, **dadurch gekennzeichnet, dass** die Position der zu stapelnden Paletten (P) welche in eine Position, unter den gestapelten angehobenen Paletten (P1, P2, P3), herangeführt (Pa) werden, von einer Sonde oder Lichtschranke so bestimmt ist, dass die besagte Palette (P) mit dem vorderen Rand eine leicht zurückversetzte Position zur Ebene einnimmt welche von den vertikalen, von der Betätigungsvorrichtung (4) nach unten abstehenden, Anschlagprofilen (4g) bestimmt wird.

8. Stapelverfahren welches mittels der Stapel-/Entstapelmaschine gemäß einem der vorherigen Ansprüche 1 bis 7 durchgeführt wird, welche mindestens eine Transfervorrichtung (2) für die Zufuhr (Pa) einzelner Paletten (P) und von Stapel von Paletten (P1, P2, P3), sowie Hebearme (5a) für die einzelnen Paletten (P) und für Stapel von Paletten (P1, P2, P3) umfasst, wobei diese vertikal (5v) und gegenläufig horizontal (5h) betätigbar sind und obere (5b) und untere Auflagen (5c) aufweisen welche zwischen die Strukturelemente der Paletten einführbar sind und vertikal mehr als die Palettenhöhe beabstandet sind und welche, in den Bereich des Durchlaufs der von mindestens einer Transfervorrichtung (2) herangeführten Paletten ragende, Anschlagprofile (4g) umfasst, **dadurch gekennzeichnet, dass** die zu stapelnde Palette (P), mit dem vorderen Rand in Bezug auf die vertikalen Anschlagprofile (4g) leicht zurückversetzt, in eine Position unterhalb des angehobenen Palettenstapels zugeführt (Pa) wird, dass der Palettenstapel anschließend auf die zugeführte Palette (P) abgelegt wird, dass die Hebearme (5a) auseinanderbewegt (5h) werden um die Auflagen (5b, 5c) seitlich aus den Paletten (P1, P2) zu ziehen, dass die Hebearme abgesenkt (5v) werden um anschließend die unteren Auflagen (5c) in die zu stapelnde Palette (P) und die oberen Auflagen (5b) in die Palette (P1) des darüber angeordneten Stapels einzuführen, dass anschließend die Hebearme so weit angehoben (5v) werden dass die zu stapelnde Palette (P) nicht von der Förderlinie (2) abgehoben wird um eine leichte Beabstandung (Z) zwischen der zu stapelnden Palette (P) und der Palette (P1) des Palettenstapels zu erreichen, dass durch Betätigung der Transfervorrichtung (2) die zu stapelnde Palette (P) gegen die unteren Enden der vertikalen Anschlagprofile (4g) bewegt (PA) wird, dass anschließend die Hebearme (5a) alle Paletten (P, P1, P2, P3) anheben und dass, durch Zusammendrücken der zwei untersten Paletten (P, P1) an der Stapelbasis, die Seitenränder dieser zueinander ausgerichtet werden.

9. Entstapelverfahren welches mittels der Stapel-/Entstapelmaschine, gemäß einem der Ansprüche 1 bis 7, durchgeführt wird, **dadurch gekennzeichnet, dass** die zu entstapelnde Palette (P), zusammen mit dem darüber angeordneten Palettenstapel (P1, P2, P3), von den Hebearmen (5a) angehoben (5v) wird wodurch eine Beabstandung (Z) zwischen der zu entstapelnden Palette (P) und der darüber angeordneten, nicht nach den seitlichen Rändern ausgerichteten Palette (P1) entsteht, dass anschließend das Ausrichten zwischen den besagten Rändern durch Zusammendrücken (5h) der Paletten (P, P1) mittels der Hebearme erfolgt, dass anschließend der Palettenstapel auf die Transfervorrichtung (2) abgelegt wird, dass die Auflagen (5b, 5c) aus den Paletten (P, P1) durch Auseinanderbewegen (5h) der Hebearme (5a) erfolgt welche angehoben werden um anschließend die oberen Auflagen (5b) in die vorunterste Palette (P2) des übrigen Palettenstapels und die unteren Auflagen (5c) in die unterste Palette (P1) des Stapels einzuführen, dass anschließend die Hebearme (5a) angehoben werden wobei die entstapelte Palette (P) auf der Transfervorrichtung (2) in exakter Position, mit den Seitenrändern nach den entsprechenden Rändern der untersten Palette (P1) des Stapel ausgerichtet und mit dem vorderen Rand nach den Anschlagprofilen (4g) ausgerichtet, verbleibt um von der Position unterhalb des verbleibenden Palettenstapels von der Transfervorrichtung (2) abgeführt zu werden.

10. Stapel-/Entstapelverfahrten gemäß der Ansprüche 8 und 9, **dadurch gekennzeichnet dass**, sei es um das Ausrichten des vorderen Randes der zu bearbeitenden Palette (P) mittels der Anschlagprofile (4g), als auch das Ausrichten der seitlichen Ränder der zu bearbeitenden Palette (P) mit den entsprechenden Rändern der untersten Palette des Palettenstapels, zu erreichen, die zu bearbeitende Palette (P) von den unteren Auflagen (5c) der Hebearme (5a) so zurückgehalten wird, dass sie von der untersten Palette (P1) des verbleibenden Palettenstapels beabstandet (Z) ist und nicht vom Gewicht des darüber angeordneten Palettenstapels belastet ist.

## Claims

1. Machine for stacking and unstacking pallets which comprises a frame (1) bearing an actuating device (4) for two lever arms (5a) parallel to one another and to the feed direction (Pa) of the pallets (P) to be stacked/unstacked and the pallet stack (P1, P2, P3), and a transfer member or a transfer device (2) including frame (4a, 4b) for supplying (Pa) or removing the pallets (P) to be stacked or unstacked, which operates parallel to the longitudinal extension of the lever arms (5a), wherein the actuating device (4) is attached, sliding vertically (4v), to the frame (1) of the machine and is actuated by a drive shaft (4d) by belts (4e), by a threaded spindle with screw nut, by a toothed bar with toothed wheel or by a linear mechanical or hydraulic servodrive, which acts between the frame (1) of the machine and the frame (4a, 4b) of the actuating device (4), wherein the lever arms (5a) are attached horizontally and transverse to the feed direction (Pa) in sliding (5h) manner on the frame (4a, 4b) of the actuating device (4) and are actuated in the opposite direction mechanically by means of toothed wheel (5n) and toothed bar (5g) or by means of linear mechanical or hydraulic servodrive,
**characterised in that** both lever arms (5a) have a greater height than the height of a pallet (P) and are provided with two pairs of upper (5b) and lower supports (5c) which are separated vertically by more than the height of a pallet (P) and are spaced apart horizontally such that they can be introduced into the intermediate spaces between the structural elements of the pallets.

2. Machine according to claim 1, **characterised in that**, for feeding/removing the pallets (P) to be stacked/unstacked, two transfer devices (20b, 20c) are provided offset from one another by 90° and these cross in the region below the pallet stack, wherein one of the transfer devices is vertically movable (20v), in order that a pallet (P) introduced onto one of the devices can be brought to the second device which acts transversely to the first, and supply (Pa) and/or removal of the individual pallets (P) is made possible laterally at the machine.

3. Machine according to claim 1, **characterised in that** for feeding/removing the pallets (P) to be stacked/unstacked, two transfer devices are provided which operate offset from one another by 90° and that, in the region below the pallet stack, a platform rotatable (20r) according to a vertical axis is provided which has roller elements (20b) and conveyor chains (20c) which are suitable for taking on a pallet which is introduced onto one of said transfer devices, in order to convey this to the second transfer device as a result of rotating (20r) the platform, which platform acts offset by 90° from the first.

4. Machine according to claim 1, **characterised in that** the position of the upper supports (5b) and lower supports (5c) are adjustable (5x) on both lever arms (5a), according to the longitudinal extension of the arms.

5. Machine according to claim 1, **characterised in that** the distance between the upper supports (5b) and the lower supports (5c) is vertically adjustable (5z).

6. Machine according to claim 1, **characterised in that** the actuating device (4) for the lever arms (5a) has vertical stop profiles (4g) in the direction of feeding (Pa) the pallets (P) to be stacked, which actuating device has vertical stop profiles (4g) which penetrate with their lower end in the region of the run of the pallets (P) introduced (Pa) by the transfer device (2).

7. Machine according to claim 1, **characterised in that** the position of the pallets to be stacked (P), which have been introduced (Pa) in a position beneath the stacked raised pallets (P1, P2, P3), is determined by a probe or light bar such that said pallet (P) adopts, with the front edge, a position slightly recessed with regard to the plane which is determined by the vertical stop profiles (4g) projecting downwards from the actuating device (4).

8. Stacking method which is carried out by means of the stacking/unstacking machine according to one of the previous claims 1 to 7, which comprises at least one transfer device (2) for feeding (Pa) individual pallets (P) and stacks of pallets (P1, P2, P3), as well as lever arms (5a) for the individual pallets (P) and stacks of pallets (P1, P2, P3), wherein these can be actuated vertically (5v) and opposite horizontally (5h) and have upper (5b) and lower supports (5c) which can be introduced between the structural elements of the pallets and are spaced apart vertically by more than the height of the pallet and comprising stop profiles (4g) penetrating into the region of the flow path of the pallet introduced by at least one transfer device (2), **characterised in that** the pallet to be stacked (P), with the front edge slightly recessed in respect of the vertical stop profiles (4g), is supplied (Pa) in a position beneath the raised pallet stack, that the pallet stack is then deposited onto the supplied pallets (P), that the lever arms (5a) are moved apart from one another (5h) in order to pull the supports (5b, 5c) laterally out of the pallets (P1, P2), that the lever arms are lowered (5v) in order then to introduce the lower supports (5c) into the pallet to be stacked (P) and the upper supports (5b) into the pallet (P1) of the stack arranged above same, that subsequently the lever arms are raised (5v) so far that the pallet to be stacked (P) is not raised by the conveying line (2) in order to achieve a slight spacing (Z) between the pallet to be stacked (P) and the pallet (P1) of the pallet stack, that by actuating the transfer device (2), the pallet to be stacked (P) is moved (PA) against the lower ends of the vertical stop profiles (4g), that then the lever arms (5a) raise all pallets (P, P1, P2, P3) and that by pressing together the two lowest pallets (P, P1) on the base of the stack, the side edges of these are aligned towards one another.

9. Unstacking method which is carried out by means of the stacking/unstacking machine, according to one of claims 1 to 7, **characterised in that** the pallets (P) to be unstacked, together with the pallet stack (P1, P2, P3) arranged above same is raised (5v) by the lever arms (5a), whereby a spacing (Z) occurs between the pallet (P) to be unstacked and the pallet (P1) arranged above same but not aligned according to the lateral edges, that subsequently the alignment takes place between said edges by pressing together (5h) the pallets (P, P1) by means of the lever arms, that the supports (5b, 5c) arise from the pallets (P, P1) by moving apart (5h) the lever arms (5a) which are raised in order then to introduce the upper supports (5b) into the lowest-but-one pallet (P2) of the remaining pallet stack and the lower supports (5c) into the lowest pallet (P1) of the stack, that then the lever arms (5a) are raised, wherein the unstacked pallet (P) remains on the transfer device (2) in exact position, with the side edges aligned according to the corresponding edges of the lowest pallet (P1) of the stack and with the front edge aligned according to the stop profiles (4g), in order to be guided away from the position beneath the remaining pallet stack by the transfer device (2).

10. Stacking/unstacking method according to claims 8 and 9, **characterised in that** to achieve the alignment of the front edge of the pallet (P) to be machined by means of the stop profiles (4g), and also the alignment of the lateral edges of the pallet (P) to be machined with the corresponding edges of the lowest pallet of the pallet stack, the pallet (P) to be machined is held back by the lower supports (5c) of the lever arms (5a) to such an extent that it is spaced apart (Z) by the lowest pallet (P1) of the remaining pallet stack and not by the weight of the pallet stack arranged above same.

## Revendications

1. Machine pour empiler et désempiler des palettes, comprenant un châssis (1) qui porte un dispositif d'actionnement (4) pour deux bras de levage parallèles (5a) entre eux et à la direction (Pa) d'alimentation des palettes (P) à empiler/désempiler et de la pile de palettes (P1, P2, P3), et un organe ou dispositif de transfert (2) avec châssis (4a, 4b) pour l'alimentation (Pa) ou l'évacuation des palettes (P) à empiler ou à désempiler, qui fonctionne parallèlement à l'extension longitudinale des bras de levage (5a), le dispositif d'actionnement (4) étant monté de manière à coulisser verticalement (4v) sur le châssis (1) de la machine et étant entraîné par un arbre (4d) en enroulant des courroies (4e), par une vis sans fin avec écrou, par une crémaillère avec pignon ou par un actionneur linéaire mécanique ou hydraulique agissant entre le châssis (1) de la machine et le châssis (4a, 4b) du dispositif d'actionnement (4), les bras de levage (5a) étant montés horizontalement et transversalement par rapport à la direction d'alimentation (Pa) et étant actionnés en sens inverse mécaniquement au moyen d'une roue dentée (5n) et d'une crémaillère (5g) ou au moyen d'un actionneur linéaire mécanique ou hydraulique,
**caractérisé en ce que** les deux bras de levage (5a) ont une hauteur supérieure à celle d'une palette (P) et sont pourvus de deux paires de supports supérieurs (5b) et inférieurs (Sc) qui sont espacés verticalement de plus de la hauteur d'une palette (P) et espacés horizontalement de manière à pouvoir être insérés dans les espaces entre les éléments structurels des palettes.

2. Machine selon la revendication 1, **caractérisée en ce que**, pour l'alimentation/l'évacuation des palettes (P) à empiler/désempiler, deux dispositifs de transfert (20b, 20c) fonctionnant avec un décalage de 90° l'un par rapport à l'autre sont prévus et **en ce que** ceux-ci se croisent dans la zone située sous la pile de palettes, l'un des dispositifs de transfert étant mobile verticalement (20v) de sorte qu'une palette (P) amenée sur l'un des dispositifs puisse être transférée vers le deuxième dispositif agissant transversalement au premier, ce qui permet l'alimentation (Pa) et/ou l'évacuation des palettes individuelles (P) latéralement par rapport à la machine.

3. Machine selon la revendication 1, **caractérisée en ce que**, pour l'alimentation/l'évacuation des palettes (P) à empiler/désempiler, deux dispositifs de transfert fonctionnant avec un décalage de 90° l'un par rapport à l'autre sont prévus et **en ce que**, dans la zone située sous la pile de palettes, est prévue une plate-forme qui comporte des éléments roulants (20b) et des chaînes de transport (20c) aptes à prendre en charge une palette amenée sur l'un desdits dispositifs de transfert afin de la transférer, par rotation (20r) de la plate-forme, vers le deuxième dispositif de transfert qui fonctionne avec un décalage de 90° par rapport au premier.

4. Machine selon la revendication 1, **caractérisée en ce que** la position des supports supérieurs (5b) et des supports inférieurs (5c) sur les deux bras de levage (5a) est réglable (5x) dans le sens longitudinal des bras.

5. Machine selon la revendication 1, **caractérisée en ce que** la distance entre les supports supérieurs (5b) et les supports inférieurs (5c) est réglable verticalement (5z).

6. Machine selon la revendication 1, **caractérisée en ce que** le dispositif d'actionnement (4) des bras de levage (5a) comporte, dans la direction d'alimentation (Pa) des palettes (P) à empiler, des profilés de butée verticaux (4g) dont l'extrémité inférieure fait saillie dans la zone de passage des palettes (P) amenées (Pa) par le dispositif de transfert (2).

7. Machine selon la revendication 1, **caractérisée en ce que** la position des palettes (P) à empiler, qui sont amenées (Pa) dans une position située sous les palettes (P1, P2, P3), est déterminée par une sonde ou une barrière lumineuse de telle sorte que ladite palette (P) occupe, avec son bord avant, une position légèrement en retrait par rapport au plan défini par les profilés de butée verticaux (4g) s'étendant vers le bas à partir du dispositif d'actionnement (4).

8. Procédé d'empilage mis en œuvre au moyen de la machine d'empilage/désempilage selon l'une des revendications 1 à 7 précédentes, qui comprend au moins un dispositif de transfert (2) pour l'amenée (Pa) de palettes individuelles (P) et de piles de palettes (P1, P2, P3), ainsi que des bras de levage (5a) pour les palettes individuelles (P) et pour les piles de palettes (P1, P2, P3), ceux-ci pouvant être actionnés verticalement (5v) et horizontalement en sens inverse (5h) et comportant des supports supérieurs (5b) et inférieurs (5c) pouvant être insérés entre les éléments structurels des palettes et espacés verticalement de plus de la hauteur des palettes, et qui comprend des profilés de butée (4g) faisant saillie dans la zone de passage des palettes amenées par au moins un dispositif de transfert (2), **caractérisé en ce que** la palette (P) à empiler est amenée (Pa) dans une position située sous la pile de palettes soulevée avec son bord avant légèrement en retrait par rapport aux profilés de butée verticaux (4g), que la pile de palettes est ensuite déposée sur la palette amenée (P), que les bras de levage (5a) sont écartés (5h) afin de retirer latéralement les supports (5b, 5c) hors des palettes (P1, P2), que les bras de levage sont abaissés (5v) pour ensuite introduire les supports inférieurs (5c) dans la palette à empiler (P) et les supports supérieurs (5b) dans la palette (P1) de la pile située au-dessus, que les bras de levage sont ensuite relevés (5v) suffisamment pour que la palette à empiler (P) ne soit pas soulevée de la ligne de convoyage (2) afin de créer un léger écart (Z) entre la palette à empiler (P) et la palette (P1) de la pile de palettes, que, par l'actionnement du dispositif de transfert (2), la palette à empiler (P) est déplacée (PA) contre les extrémités inférieures des profilés de butée verticaux (4g), que les bras de levage (5a) soulèvent ensuite toutes les palettes (P, P1, P2, P3) et que, par compression des deux palettes les plus basses (P, P1) à la base de la pile, les bords latéraux de celles-ci sont alignés les uns par rapport aux autres.

9. Procédé de désempilage mis en œuvre au moyen de la machine d'empilage/désempilage selon l'une des revendications 1 à 7, **caractérisé en ce que** la palette (P) à désempiler, ainsi que la pile de palettes (P1, P2, P3) disposée en dessus, est soulevée (5v) par les bras de levage (5a), ce qui crée un écart (Z) entre la palette à désempiler (P) et la palette (P1) disposée au-dessus et non alignée selon les bords latéraux, que l'alignement entre lesdits bords s'effectue ensuite par compression (5h) des palettes (P, P1) au moyen des bras de levage, que la pile de palettes est ensuite déposée sur le dispositif de transfert (2), que le retrait des appuis (5b, 5c) des palettes (P, P1) s'effectue par écartement (5h) des bras de levage (5a), lesquels sont soulevés afin d'introduire ensuite les appuis supérieurs (5b) dans la palette avant-dernière (P2) de la pile de palettes restante et les appuis inférieurs (5c) dans la palette la plus basse (P1) de la pile, que les bras de levage (5a) sont ensuite relevés, la palette désempilée (P) étant alors placée sur le dispositif de transfert (2) dans une position exacte, ses bords latéraux alignés sur les bords correspondants de la palette la plus basse (P1) de la pile et son bord avant aligné sur les profilés de butée (4g), afin d'être évacuée de la position située sous la pile de palettes restante par le dispositif de transfert (2).

10. Procédé d'empilage/ désempilage selon les revendications 8 et 9, **caractérisé en ce que**, que ce soit pour l'alignement du bord avant de la palette (P) à traiter au moyen des profilés de butée (4g), ou pour l'alignement des bords latéraux de la palette (P) à traiter avec les bords correspondants de la palette la plus basse de la pile de palettes, la palette à traiter (P) est retenue par les appuis inférieurs (5c) des bras de levage (5a) de telle sorte qu'elle soit espacée (Z) de la palette la plus basse (P1) de la pile de palettes restante et qu'elle ne soit pas soumise au poids de la pile de palettes disposée au-dessus.
